# EUROPEAN PATENT SPECIFICATION

(11) **EP 1 695 866 B1**
(45) Date of publication and mention of the grant of the patent: **21.04.2010**
(21) Application number: 06075390.2
(22) Date of filing: 21.02.2006
(51) Int. Cl.: B60P 1/56, B60P 1/36, B60P 1/38

(54) **Hopper barge**
Trichtercontainer
Conteneur à entonnoir

(30) Priority: 24.02.2005 NL 1028403
(43) Date of publication of application: 30.08.2006
(73) Proprietor: Internationaal Transportbedrijf Butter B.V.,, 8251 JT Dronten (NL)
(72) Inventor: Klein Woolthuis, Harmen, 3741 LM Baarn (NL)
(74) Representative: Kupecz, Arpad

(56) References cited:
- FR-A- 2 679 180
- GB-A- 1 192 101
- US-A- 2 661 104

## Description

The present invention relates to a hopper barge assembly in accordance with the preamble of claim 1.

Such a hopper barge assembly is for example known from GB 1192101 A. Hopper barges are commonly used for the transport of bulk goods such as beets, potatoes and the like. The entire hopper barge assembly, that is to say including the undercarriage, is positioned at a discharge station. When the load is to be discharged, the discharge means is activated and the load is removed from the loading body.

A drawback of this known hopper barge assembly is its heavy construction. In particular the supporting construction of the loading body, by means of which the loading body is mounted on an undercarriage of a trailer or truck, is heavy. This is usually comprised of longitudinal beams and cross beams connected thereto, such as to form angular connections. The known constructions take up much space. Moreover, in the known cases the construction is located outside the loading body, i.e. below the same. This creates the extra drawback of increasing the total weight of the hopper barge assembly as a whole.

It is the object of the invention to provide an improved hopper barge assembly. It is also an object of the present invention to provide a lighter construction. An object of the present invention is also to provide a hopper barge assembly whose total weight is lower.

At least one of the above-mentioned objects is attained with a hopper barge assembly of the kind mentioned in the preamble, and which encompasses the measures of the characterising part in claim 1.

This achieves in particular that the whole frame of the hopper barge can be embodied much lighter. The weight of an empty hopper barge assembly is thereby reduced significantly, so as to considerably increase the loading capacity. An extra advantage gained immediately is the appreciable improvement of the stability of the hopper barge assembly. The improvement of the hopper barge assembly's stability lies above all in the fact that a large part of the frame construction which is normally located under the loading body, may be dispensed with.

Further advantages of the hopper barge assembly according to the present invention will suggest themselves to a person skilled in the art after reading the following description and examining the appended drawings.

Specific preferred embodiments of the hopper barge assembly according to the invention are described in the subclaims.

More especially the feature that the first connecting members are also fastened to the supporting points of the frame provides an advantage. This provides a direct coupling between the lower wall elements of the loading body and the undercarriage thereunder, whereby the sturdiness and rigidity are further improved. If an additional reduction of weight is desired, the number of connecting members may be reduced such as to maintain the sturdiness and rigidity, while limiting the weight.

According to a further preferred embodiment, the supporting points are located at a position near the discharge means, and second connecting members are fastened to the respective lower wall elements at a position between the fastening position of the first connecting members and the end of the lower wall elements facing away from the discharge means. By embodying the two lower loading body wall elements with double the connecting members, a very rigid construction is created. This was shown to permit a further reduction of the underlying frame construction. The total weight may thus be reduced further.

It is also preferred for the first and the second connecting members to be connected with each other, preferably at a position above the discharge means. This in particular makes it possible to form rigidity-enhancing triangular connections.

For that reason it is preferred for the connecting members to always form a triangle with at least a portion of the respective lower wall element.

If above the discharge means a covering is provided that rests on the supporting points of the frame, the advantage is that the goods in the loading body will rest on the covering instead of resting directly on this discharge means, with the result that this force is transferred to the supporting points of the frame. Of course, this makes it necessary for a passage to be provided at both sides of the covering, through which the goods are able to pass to the discharge means.

A particularly suitable embodiment is obtained when the covering is fastened to at least one of the first and second connecting members. It is especially preferred for the covering to be fastened to the first connecting members. The reason for this is that the fastening position of the first connecting members to the lower wall elements is closer to the discharge means than that of the second connecting members.

According to a further preference, a particularly rigid construction is obtained when the second connecting members are fastened at a position where a lower wall element meets a side wall element. In this way a direct connection between the lower wall elements and the two side wall elements is obtained. This promotes a rigid embodiment of the loading body.

It is therefore especially preferred for the second connecting member to extend between where the lower wall elements at the two sides of the loading body meet the side wall elements, and for the second connecting member to be connected at a position above the discharge means, with first connecting members that extend upward from the two lower wall elements.

Finally, it is preferred that the covering of a hopper barge assembly as mentioned above be firmly fastened to the first connecting members. This makes the total construction very rigid, with the additional advantage that, due to this rigidity, the lower wall elements will have no effect on the discharge means.

Hereafter the invention will be explained by way of a non-limiting drawing. The drawing shows only one preferred embodiment of a hopper barge according to the invention.

Fig. 1 shows a perspective view of a hopper barge assembly according to the invention.

Fig. 2 shows a detailed view of the construction frame with two lower side walls of a hopper barge assembly according to Fig. 1.

Similar components in the figures are designated with the same reference numerals. If these components have an identical function or an equivalent effect, they will not be described in detail for each of the separate figures.

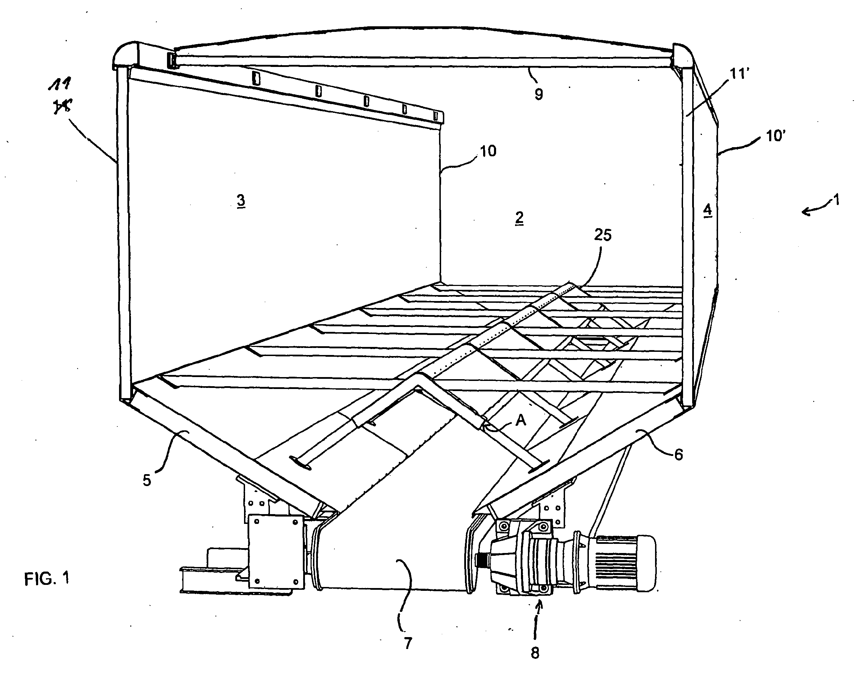

A hopper barge assembly 1 as shown in Fig. 1 comprises a loading body 2 bounded by side wall elements 3, 4 and lower wall elements 5, 6. At the bottom of the loading body 2, between the side wall elements 5, 6, a discharge means 7 is provided. In the present case, the discharge means 7 is an endless belt guided around two rollers (not shown). When the drive 8 sets the discharge means 7 into motion, products present in the loading body 2 will be conveyed by the discharge means 7 and transported out of the loading body 2.

At the upper side of the side wall elements 3, 4, connecting members 9 are provided (only one is shown) that keep the side wall elements 3, 4 in a vertical position. At the ends 10, 10', 11, 11', end walls are mounted, which also ensure that the side wall elements 3, 4 are correctly positioned.

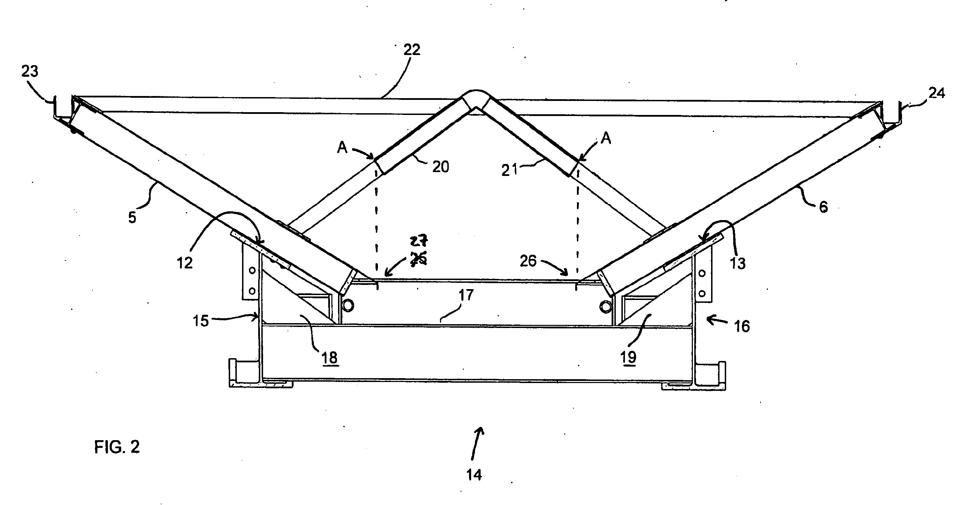

Fig. 2 shows a detailed view of the lower part of the hopper barge assembly 1. The underside of the lower wall elements 5, 6 rest on two supporting points 12, 13, that are part of a frame construction 14. The supporting points 12, 13 are part of modified I-beams 15, 16. These I-beams 15, 16 are connected with each other by means of an intermediate component 17. The I-beams 15, 16 and the intermediate component 17 are part of the undercarriage of a vehicle. The embodiment shown in Fig. 2 is also provided with extra reinforcing elements 18, 19. The upper side of the I-beams 15, 16 is adapted to the slope of the lower wall elements 5, 6.

. In the embodiment shown in Fig. 2, the lower wall elements 5, 6 are connected with each other via first connecting members 20, 21. These first connecting members 20, 21 are connected with each other by means of the second connecting member 22. This combination of connecting members 20, 21 and 22 provides a very solid and strong construction of the loading body and the undercarriage. In the embodiment shown, the second connecting member provides a connection between the connecting members that connect the lower wall elements 5, 6 with the respective side walls 3 and 4 (not shown). The side wall elements 3, 4 may be inserted in muffs 23 and 24, respectively. Such a method of insertion is generally known in the art.

Reverting to Fig. 1, the covering 25 is shown, which extends above the discharge means 7. The covering 25 may be fastened in a suitable manner to the first connecting members 20, 21. The same may be comprised of plates fastened to the first connecting members 20 and 21, respectively. In the embodiment shown in Fig. 2, there will in that case be a space between the upper sides of these plates (not shown). This space may be closed off by an additional covering. This covering will preferably extend to a position indicated with A in Fig. 1 and in Fig. 2. Providing such a covering 25 affords the advantage that a product in the loading body 2 does not directly exert any forces on the discharge means 7. The forces exerted by the products are in that case absorbed by the covering, which subsequently transfers the forces to the lower wall elements 5, 6 and to the supporting surfaces 12 and 13, respectively, of the I-beams 15, 16. Thus the frame 14 absorbs the forces exerted by the product. The second connecting member 22 provides an additional reinforcement of the construction. This practically excludes any deformation of the first connecting members 20, 21 and the lower wall elements 5, 6. The rigidity of the hopper barge will therefore also be improved in the sense that there will not be enough play between the ends 26, 27 of the lower wall elements 5, 6 for products to be able to fall between the lower wall elements 5, 6 and the discharge means 7.

After reading this description and studying the drawing, a person skilled in the art will be quite capable of creating further embodiments of the invention. The invention is, however, not limited to the configuration revealed in the description and shown in the drawing. The invention is limited by the appended claims only.

## Claims

1. A hopper barge assembly (1), comprising:
- a loading body (2), which is at least comprised of two slantingly disposed lower wall elements (5, 6) and substantially vertically disposed side walls (3, 4),
- a supporting frame (14) forming part of an undercarriage of a vehicle, and
- a discharge means (7) disposed between the two lower wall elements (5, 6),
**characterised in that** the lower wall elements (5, 6) of the loading body (2) rest with their bottom sides on each of the sides of the frame (14) on a supporting point (12, 13) of the frame (14), and wherein the lower wall elements (5, 6) are connected with each other by first connecting members (20, 21) provided inside the loading body (2), which first connecting members (20, 21) are at least in the area of the supporting points (12, 13) fastened to the lower wall elements (5, 6) and fastened to the supporting points (12, 13) of the frame (14).

2. A hopper barge assembly (1) according to claim 1, wherein the supporting points (12, 13) are located at a position near the discharge means, and second connecting members (22) are fastened to the respective lower wall elements (5, 6) at a position between the fastening position of the first connecting members and the end of lower the wall elements (5, 6) facing away from the discharge means.

3. A hopper barge assembly (1) according to claim 2, wherein the first (20, 21) and second (22) connecting members are connected with each other, preferably at a position above the discharge means.

4. A hopper barge assembly (1) according to claim 3, wherein the connecting members (20, 21; 22) always form a triangle with at least a portion of the respective lower wall element (5, 6).

5. A hopper barge assembly (1) according to claims 2-4, wherein the second connecting members (22) are fastened at a position (23, 24) where a lower wall element (5, 6) meets a side wall element.

6. A hopper barge assembly (1) according to claims 1-5, wherein above the discharge means (7) a covering (25) is provided that rests on the supporting points of the frame (14).

7. A hopper barge assembly (1) according to claim 6, wherein the covering (25) is fastened to at least one of the first (20, 21) and second (22) connecting members, preferably to the first connecting members (20, 21).

8. A hopper barge assembly (1) according to claims 2-7, wherein the second connecting member (22) extends between where the lower wall elements (5, 6) at the two sides of the loading body meet the side wall elements, and is connected at a position above the discharge means (7) with first connecting members (20, 21) that extend upward from the two lower wall elements (5, 6).

9. A hopper barge assembly (1) according to claim 6, wherein the covering (25) tapers towards the top, and wherein the same is fastened to first connecting members (20, 21) that extend upward from the two lower wall elements (5, 6).

## Patentansprüche

1. Trichtercontainer-Baueinheit (1), umfassend:
- einen Ladekörper (2), der wenigstens aus zwei geneigt angeordneten unteren Wandelementen (5, 6) und im wesentlichen vertikal angeordneten Seitenwänden (3, 4) besteht,
- einen Stützrahmen (14), der Teil eines Untergestells eines Fahrzeugs bildet, und
- ein Entlademittel (7), das zwischen den beiden unteren Wandelementen (5, 6) angeordnet ist,
**dadurch gekennzeichnet, dass** die unteren Wandelemente (5, 6) des Ladekörpers (2) mit ihren Unterseiten auf jeder der Seiten des Rahmens (14) auf einem Stützpunkt (12, 13) des Rahmens (14) ruhen und dass die unteren Wandelemente (5, 6) durch erste Verbindungselemente (20, 21) miteinander verbunden sind, welche im Inneren des Ladekörpers (2) vorgesehen sind, wobei die ersten Verbindungselemente (20, 21) wenigstens im Bereich der Stützpunkte (12, 13) an den unteren Wandelementen (5, 6) sowie an den Stützpunkten (12, 13) des Rahmens (14) befestigt sind.

2. Trichtercontainer-Baueinheit (1) nach Anspruch 1, bei welcher sich die Stützpunkte (12, 13) in einer Position nahe des Entlademittels befinden und zweite Verbindungsmittel (22) an den jeweiligen unteren Wandelementen (5, 6) in einer Position zwischen der Befestigungsposition der ersten Verbindungselemente und dem von dem Entlademittel abgewandten Ende der unteren Wandelemente (5, 6) befestigt sind.

3. Trichtercontainer-Baueinheit (1) nach Anspruch 2, bei welcher die ersten (20, 21) und die zweiten (22) Verbindungselemente miteinander verbunden sind, vorzugsweise an einer Position über dem Entlademittel.

4. Trichtercontainer-Baueinheit (1) nach Anspruch 3, bei welcher die Verbindungselemente (20, 21; 22) mit wenigstens einem Teil des jeweiligen unteren Wandelementes (5, 6) stets ein Dreieck bilden.

5. Trichtercontainer-Baueinheit (1) nach den Ansprüchen 2-4, bei welcher die zweiten Verbindungselemente (22) in einer Position (23, 24) befestigt sind, an der ein unteres Wandelement (5, 6) auf ein Seitenwandelement trifft.

6. Trichtercontainer-Baueinheit (1) nach den Ansprüchen 1-5, bei welcher oberhalb des Entlademittels (7) eine Abdeckung (25) vorgesehen ist, welche auf den Stützpunkten des Rahmens (14) ruht.

7. Trichtercontainer-Baueinheit (1) nach Anspruch 6, bei welcher die Abdeckung (25) an wenigstens einem der ersten (20, 21) und der zweiten (22) Verbindungselemente, vorzugsweise an den ersten Verbindungselementen (20, 21), befestigt ist.

8. Trichtercontainer-Baueinheit (1) nach den Ansprüchen 2-7, bei welcher sich das zweite Verbindungselement (22) zwischen den Stellen erstreckt, an welchen die unteren Wandelemente (5, 6) an den beiden Seiten des Ladekörpers auf die Seitenwandelemente treffen, und ist in einer Position über dem Entlademittel (7) mit ersten Verbindungselementen (20, 21) verbunden, die sich von den zwei unteren Wandelementen (5, 6) aus nach oben erstrecken.

9. Trichtercontainer-Baueinheit (1) nach Anspruch 6, bei welcher die Abdeckung (25) nach oben hin spitz zusammenläuft und bei welcher die Abdeckung an ersten Verbindungselementen (20, 21) befestigt ist, die sich von den zwei unteren Wandelementen (5, 6) aus nach oben erstrecken.

## Revendications

1. Ensemble de conteneur à entonnoir (1), comprenant :
un corps de chargement (2), qui est au moins composé de deux éléments de paroi inférieure disposés de manière inclinée (5, 6) et de parois latérales disposées sensiblement verticalement (3, 4),
un châssis de support (14) formant une partie d'un train roulant d'un véhicule, et
un moyen de déchargement (7) disposé entre les deux éléments de paroi inférieure (5, 6),
**caractérisé en ce que** les éléments de paroi inférieure (5, 6) du corps de chargement (2) reposent avec leurs côtés inférieurs sur chacun des côtés du châssis (14) sur un point de support (12, 13) du châssis (14), et **en ce que** les éléments de paroi inférieure (5, 6) sont reliés les uns aux autres par des premiers éléments de raccord (20, 21) prévus à l'intérieur du corps de chargement (2), lesquels premiers éléments de raccord (20, 21) sont au moins dans la région des points de support (12, 13) fixés aux éléments de paroi inférieure (5, 6) et fixés aux points de support (12, 13) du châssis (14).

2. Ensemble de conteneur à entonnoir (1) selon la revendication 1, où les points de support (12, 13) sont situés à une position à proximité du moyen de déchargement, et des deuxièmes éléments de raccord (22) sont fixés aux éléments de parois inférieure respectifs (5, 6) à une position entre la position de fixation des premiers éléments de raccord et l'extrémité des éléments de paroi inférieure (5, 6) faisant face au moyen de déchargement.

3. Ensemble de conteneur à entonnoir (1) selon la revendication 2, où les premiers (20, 21) et les deuxièmes éléments de raccord (22) sont reliés les uns aux autres, de préférence à une position au-dessus du moyen de déchargement.

4. Ensemble de conteneur à entonnoir (1) selon la revendication 3, où les éléments de raccord (20, 21 ; 22) forment toujours un triangle avec au moins une partie de l'élément de paroi inférieure respectif (5, 6).

5. Ensemble de conteneur à entonnoir (1) selon les revendications 2 à 4, où les deuxièmes éléments de raccord (22) sont fixés à une position (23, 24) où un élément de paroi inférieure (5, 6) rencontre un élément de paroi latérale.

6. Ensemble de conteneur à entonnoir (1) selon les revendications 1 à 5, où au-dessus du moyen de déchargement (7) une couverture (25) est prévue qui repose sur le point de support du châssis (14).

7. Ensemble de conteneur à entonnoir (1) selon la revendication 6, où la couverture (25) est fixée à au moins l'un des premiers (20, 21) et deuxièmes (22) éléments de raccord, de préférence aux premiers éléments de raccord (20, 21).

8. Ensemble de conteneurs à entonnoir (1) selon les revendications 2 à 7, où le deuxième élément de raccord (22) s'étend entre la position où les éléments de paroi inférieure (5, 6) des deux côtés du corps de chargement rencontrent les éléments de paroi latérale, et est relié à une position au-dessus du moyen de déchargement (7) avec des premiers éléments de raccord (20, 21) qui s'étendent verticalement à partir des éléments de paroi inférieure (5, 6).

9. Ensemble de conteneur à entonnoir (1) selon la revendication 6, où la couverture (25) se réduit vers le haut, et où celle-ci est fixée aux premiers éléments de raccord (20, 21) qui s'étendent verticalement à partir des éléments de paroi inférieure (5, 6).
